# EUROPÄISCHE PATENTSCHRIFT

(11) **EP 2 636 959 B1**
(45) Veröffentlichungstag und Bekanntmachung des Hinweises auf die Patenterteilung: **18.01.2017**
(21) Anmeldenummer: 12401036.4
(22) Anmeldetag: 05.03.2012
(51) Int. Cl.: F24F 11/00, G05D 23/19, F24D 19/10, F24D 19/00

(54) **Heizkörperregelung**
Heater control
Réglage de radiateur

(43) Veröffentlichungstag der Anmeldung: 11.09.2013
(73) Patentinhaber: Kermi GmbH, 94447 Plattling (DE)
(72) Erfinder: Fonfara, Harald, 94551 Lalling (DE); Keller, Valeri, 94469 Deggendorf (DE); Weigl, Peter, 84034 Landshut (DE)
(74) Vertreter: Mischung, Ralf

(56) Entgegenhaltungen:
- EP-A1- 0 035 085
- EP-A1- 0 370 262
- EP-A2- 0 432 341
- EP-A2- 1 484 568
- WO-A2-2006/083441
- BE-A3- 1 015 433
- DE-A1- 19 638 023
- DE-B3-102006 050 488
- GB-A- 2 428 289

## Beschreibung

Die vorliegende Erfindung betrifft ein Verfahren zur Regelung eines Heizkörpers mit Gebläseunterstützung und eine Vorrichtung zur Durchführung des Verfahrens.

Aus dem Stand der Technik sind Heizkörper mit Gebläseunterstützung bekannt, beispielsweise in Form von Unterflurkonvektoren. Das Gebläse dient dabei der variablen Erhöhung der konvektiven Wärmeabgabe. Für den Betrieb derartiger Heiz- oder auch Kühlkörper (im Folgenden wird stellvertretend für beide Varianten stets von einem Heizkörper gesprochen) sind verschiedene Randbedingungen zu beachten. So lässt sich der Heizkörper bei einer vorgegebenen Vorlauftemperatur T_{V} mit verschiedenen Massenströmen m betreiben, welche üblicherweise durch ein Regelventil geregelt werden. Ein höherer Massenstrom führt allgemein zu einer höheren Leistungsabgabe am Heizkörper. Allerdings sinkt die sogenannte Spreizung, nämlich die Differenz zwischen Vorlauftemperatur T_{V} und Rücklauftemperatur T_{R}, mit zunehmendem Massenstrom immer weiter ab, die Leistung dagegen nimmt mit dem Massenstrom im Allgemeinen zu. Eine höhere Leistung Q_{S} des ohne Gebläse betriebenen Heizkörpers lässt sich daher nur auf Kosten einer abnehmenden Spreizung durch Erhöhung des Massenstroms erreichen, wenn die Vorlauftemperatur als unveränderlich angenommen wird.

Der hohe Massenstrom bedingt aber auch für die das Heizmedium bereitstellende Pumpe einen höheren Strombedarf, der sich bereits bei Verdoppelung der Wassermenge verachtfacht. Darüber hinaus hat eine zu geringe Spreizung den Nachteil, dass Wärmeerzeuger mit einer Mindestspreizung entweder ineffizient arbeiten (Wärmepumpen, Brennwertkessel) oder höhere Gebühren für den Wärmebezug fällig werden (Fernwärme). Im Kühlfall gelten sinngemäß die gleichen Nachteile bei zu kleiner Spreizung, so dass Kälteerzeuger mit einer Mindestspreizung entweder ineffizient arbeiten (Wärmepumpen, Kaltwassersätze) oder höhere Gebühren für die Wärmeabfuhr fällig werden (Fernkälte).

Aus der EP 0432341 A2 ist ein Verfahren und eine Einrichtung zum Regeln einer Heizungsanlage bekannt, bei der einzelne Wärmetauscher, die von einem Gebläse beaufschlagt werden, zwischen zwei Betriebszuständen gehalten werden, bei denen die Wärmetauscher entweder mit vollem Massenstrom bei maximaler Gebläsedrehzahl oder vollständig unterbundenem Massenstrom und abgeschaltetem Gebläse betrieben werden. Mehrere derartige Wärmetauscher in größeren zu beheizenden Hallen werden so nach Bedarf zu- oder abschaltet, um den Leistungsbedarf der Halle zu erfüllen.

Die DE 196 38 023 A1 beschreibt eine Vorrichtung und ein Verfahren zur Klimatisierung eines Raums, wobei an einem Heizkörper ein Gebläse angeordnet ist, welches mit variabler Drehzahl betrieben werden kann. Das den Massenstrom regelnde Ventil des Heizkörpers und die Leistungsstufe des Gebläses sind entsprechend einer vorgegebenen gewünschten Luftaustrittstemperatur einstellbar.

Aufgabe der Erfindung ist es daher, eine Regelung zu schaffen, bei welcher die vorgenannten Nachteile unter Aufrechterhalten einer Mindestspreizung vermieden werden. Die Aufgabe wird gelöst durch ein Verfahren nach Anspruch 1 und eine zur Durchführung des Verfahrens geeignete Vorrichtung nach Anspruch 9.

Die Erfindung geht aus von der Erkenntnis, dass eine geforderte Heizleistung auch bei reduziertem Massenstrom abgegeben werden kann bei geeigneter Unterstützung durch ein Gebläse. Insbesondere kann die Gebläsedrehzahl in Kombination mit einem gezielt ausgewählten Massenstrom so eingestellt werden, dass auch bei der gewünschten Leistung eine vorgegebene Spreizung zwischen Vorlauf- und Rücklauftemperatur nicht unterschritten oder in engen Grenzen eingehalten wird.

Dabei wurde zunächst davon ausgegangen, dass für einen bestimmten Heizkörpertyp und eine zunächst als konstant angenommene Vorlauftemperatur die Heizleistung vom durch das Regelventil kontrollierten Massenstrom m und von der Gebläseleistung bzw. - drehzahl n_{G} abhängt. So lässt sich eine angeforderte Heizleistung Q_{S} für einen bestimmten Heizkörpertyp und bei konstanter Vorlauftemperatur durch geeignete Paarung unterschiedlicher Werte des Massenstroms und der Gebläsedrehzahl einstellen. Beispielsweise führt ein niedriger Massenstrom kombiniert mit hoher Gebläsedrehzahl zu einer bestimmten Leistung, die auch mit einem höheren Massenstrom bei entsprechend geringerer Gebläsedrehzahl erzielt würde.

Eine für verschiedene Heizkörpertypen bei jeweils verschiedenen Vorlauftemperaturen in Versuchen jeweils ermittelte Kurve beschreibt dabei die für eine bestimmte Leistung Q_{S} jeweils wählbaren Wertepaare des Volumenstroms bzw. der Gebläsedrehzahl (anstelle des Volumenstroms kann auch ein Öffnungshub oder eine am Regelventil angelegte Spannung betrachtet werden, die einem bestimmten Massenstrom jeweils eindeutig zugeordnet werden kann).

Analog dazu wurde für verschiedene Heizkörpertypen bei verschiedenen Vorlauftemperaturen jeweils die Spreizung ermittelt, die sich für die Kombination unterschiedlicher Werte des Volumenstroms bzw. der Gebläsedrehzahl einstellt. Entsprechend wurde für jeden relevanten Heizkörpertyp und jede in Frage kommende Vorlauftemperatur eine Kurve ermittelt, welche diejenigen Wertepaare für den Volumenstrom und die Gebläsedrehzahl definiert, die jeweils zur gleichen Spreizung führen. Die für die Spreizung und die Leistung ermittelten Kurven bzw. Zusammenhänge zwischen Gebläsedrehzahl und Massenstrom lassen sich zu Kennfeldern zusammensetzen und in geeigneten Speichem bzw. Datenbanken abrufbar ablegen.

Das erfindungsgemäße Verfahren sieht nun vor, für einen bestimmten Heizkörpertyp bei einer aktuell vorherrschenden (und als konstant angenommenen) Vorlauftemperatur dasjenige Wertepaar für den Massenstrom und die Gebläsedrehzahl zu ermitteln, welches einerseits die angeforderte Leistung Q_{S} ergibt und andererseits zur gewünschten bzw. vorgegebenen Spreizung ΔT zwischen Vorlauftemperatur und Rücklauftemperatur führt. Auf diese Weise wird sichergestellt, dass der Massenstrom unter üblichen Betriebsbedingungen geringer ist als beim Stand der Technik, um dadurch eine ausreichend große Spreizung zu erzielen.

Das erfindungsgemäße Verfahren betrifft demnach die Regelung der Wärmeabgabe eines Heiz- oder Kühlkörpers K, dem durch ein Regelventil V ein Heiz- oder Kühlmittel mit einem Massenstrom m unter einer Vorlauftemperatur T_{V} zugeführt und mit einer Rücklauftemperatur T_{R} entnommen wird. Die Wärmeabgabe wird unterstützt durch ein Gebläse G. Ziel ist es, eine angeforderte Heiz- oder Kühlleistung Q_{S} in einen Raum E abzugeben. Erfindungsgemäß wird der Massenstrom m und die Gebläsedrehzahl n_{G} des Gebläses G so eingestellt, dass die geforderte Heiz- oder Kühlleistung Q_{S} mit einer vorgebbaren Spreizung ΔT zwischen Vorlauf- und Rücklauftemperatur T_{V}, T_{R} abgegeben wird. Dieser erfinderische Kerngedanke wird beispielsweise folgendermaßen umgesetzt:
1) Erfassung einer aktuellen Raumtemperatur T_{E} und einer Solltemperatur T_{ES} für diesen Raum,
2) Ermittlung der aus dieser Temperaturdifferenz resultierenden erforderlichen Heizleistung Q_{S},
3) Auswahl derjenigen Kurve, welche für den verwendeten Heizkörpertyp und die vorgegebene Vorlauftemperatur die Wertepaarungen des Massenstroms mit der Gebläsedrehzahl darstellt, welche zur gewünschten Heizleistung führen,
4) Auswahl derjenigen speziellen Wertepaarung, welche dabei zur geforderten Spreizung zwischen Vorlauf- und Nachlauftemperatur führen, und
5) Einstellung des so ermittelten Massenstroms bzw. Ventilhubs und der Gebläsedrehzahl.

Die Beziehungen oder Kurven, die für die Kombinationen des Massenstroms mit der Gebläsedrehzahl jeweils eine konstante Leistung bzw. eine konstante Spreizung ergibt, können zweckmäßigerweise in Form eines Kennfeldes in einem Datenspeicher bzw. einer Datenbank hinterlegt sein, auf die der Regler oder eine übergeordnete Steuerung Zugriff hat. Die Wertepaare des Massenstroms und der Gebläsedrehzahl, die zu einer bestimmten Leistung bzw. zu einer bestimmten Spreizung führen, hängen dabei unter anderem vom Typ des Heizkörpers und der Vorlauftemperatur ab, so dass sich unterschiedlichste Kennfelder ergeben, aus denen die Steuerung bzw. der Regler die für den Einzelfall zutreffenden Werte auswählt.

Nach einer weiteren vorteilhaften Ausführungsform des Verfahrens wird zur Regelung des Heizkörpers auch die Lufttemperatur T_{L} auf der Austrittsseite des Heizkörpers erfasst und überwacht. Überschreitet die Differenz ΔT_{LE} zwischen der Lufttemperatur T_{L} und der Raumtemperatur T_{E} einen vorgebbaren Maximalwert ΔT_{LEmax}, so soll der Volumenstrom erfindungsgemäß so angepasst werden, dass die Differenz ΔT_{LE} innerhalb vorgebbarer Behaglichkeitsgrenzen bleibt. Hintergrund ist die Überlegung, dass ein zu hohes Temperaturgefälle zwischen der Luft unmittelbar am Austritt des Heizkörpers und derjenigen im Raum häufig als unbehaglich empfunden wird. Unter Berücksichtigung gesondert vereinbarter Nutzeranforderung oder allgemein vorgeschlagener Regelungen gemäß ISO 7730 kann im Falle der zu hohen Temperaturdifferenz ΔT_{LE} der Volumenstrom so angepasst werden, dass sich die Differenz innerhalb bestimmter Grenzwerte bewegt. Dies kann, je nach vorgegebenen Grenzwerten und zugelassenen Toleranzen innerhalb der Regelung, zu Abweichung bei der angeforderten Leistung, der angeforderten Spreizung oder beiden Werten führen. Alternativ können auch Regelverzögerungen vorgesehen werden, um von vorgegebenen Grenzwerten nicht abzuweichen.

Eine geeignete Vorrichtung zur Durchführung des vorgenannten Verfahrens umfasst einen Heiz- oder Kühlkörper K mit Gebläseunterstützung, der in einem Raum E anzuordnen wäre. Über ein im Zulauf oder Rücklauf des Heizkörpers angeordnetes Regelventil V wird dem Heizkörper ein Heiz- oder Kühlmedium zugeführt, mit einem Massenstrom m bei einer Vorlauftemperatur T_{V}. Ferner umfasst die erfindungsgemäße Vorrichtung wenigstens einen Regler C, der zur Einstellung des Massenstroms m über den Öffnungshub des Regelventils V (gekennzeichnet bspw. durch eine Ventilstellung St_{V} oder einen am Ventil anliegende Steuerspannung) und zur Einstellung der Drehzahl n_{G} des Gebläses G (bspw. darstellbar durch eine am Gebläse anliegende Steuerspannung, einen bestimmten Öffnungsgrad oder einen Ventilhub) ausgebildet ist. Die zur Auswahl der geeigneten Wertepaarung von Massenstrom und Gebläsedrehzahl bereitzustellenden Daten können erfindungsgemäß entweder in einem unmittelbar dem Regler zugehörigen Speicher (bevorzugte Variante) oder einer mit dem Regler verbundenen Steuerung im Sinne eines Bedienteils/Raumthermostats oder gar einer übergeordneten Steuerung D einer Gebäudeleittechnik hinterlegt werden.

Die Auswahl der zu hinterlegenden Kennfelder könnte sich beschränken auf die für einen bestimmten Heizkörpertyp oder sonstige spezielle Randbedingungen relevanten Daten, die für den jeweiligen konkreten Anwendungsfall bekannt sind. Denkbar ist es jedoch auch, eine Art Universalregler bereitzustellen, der für alle relevanten Heizkörpertypen, Vorlauftemperaturen, Ventiltypen, Betriebsdrücke etc. die nötigen Kennfelder bzw. Datensätze für m und n_{G} enthält. Bei der Installation des Reglers kann dieser durch Vorgabe der dann bekannten Randbedingungen (Heizkörpertyp, Art des Regelventils, Betriebsdruck etc.) für den speziellen Anwendungsfall vorbereitet und eingestellt werden.

Zweckmäßigerweise ist jeder Regler auch darauf vorbereitet, dass unterschiedliche Vorlauftemperaturen bereitgestellt werden, so dass für ansonsten unveränderte Bedingungen (gleicher Heizkörpertyp, gleiches Ventil und gleicher Betriebsdruck) dennoch andere Kennfelder für die Bestimmung der geeigneten Einstellung von Massenstrom und Gebläsedrehzahl verfügbar und leicht auswählbar sind. In Frage kommt daher auch eine Regelung, bei der die Vorlauftemperatur erfasst wird und die Auswahl der relevanten Kennfelder automatisch mitbestimmt, um auch bei schwankender Vorlauftemperatur stets die geforderte Heizleistung bei geforderter Spreizung bereitstellen zu können.

Eine vorteilhafte Ausführungsform eines solchen Reglers ist zur Erfassung
a) der Differenz (ΔT_{E}) zwischen einer Raum-Solltemperatur (T_{ES)} und einer Raum-Ist-Temperatur (T_{E}), und/oder
b) der Vorlauftemperatur (T_{V}), und/oder
c) der Rücklauftemperatur (T_{R}), mit welcher das Heiz-oder Kühlmittel den Heiz-oder Kühlkörper (K) verlässt, und/oder
d) des Öffnungshubs des Regelventils (V), und/oder
e) der Gebläsedrehzahl (n_{G}), und/oder
f) der Lufttemperatur (T_{L}) auf der Austrittseite des Heiz- oder Kühlkörpers (K)
ausgebildet, wobei zumindest die Werte gemäß a), d) und e) stets zu erfassen sind. Eine mittlere zu erwartende Vorlauftemperatur könnte in diesem einfacheren Fall fest hinterlegt werden, statt sie aktiv zu erfassen. Abweichungen in der Spreizung, die sich beim Betrieb auf Grund einer tatsächlich etwas schwankenden Vorlauftemperatur ergäben, könnten toleriert werden.

Eine etwas genauere Regelungen wäre möglich unter Erfassung der tatsächlichen Vorlauftemperatur (oder alternativ oder sogar ergänzend auch der Rücklauftemperatur) gemäß b) oder c), um Abweichungen dieser Temperaturen sofort berücksichtigen zu können. Dann kann das der aktuellen Vorlauftemperatur zugeordnete Kennfeld als Grundlage für die einzustellenden Werte von Massenstrom und Gebläsedrehzahl genau ausgewählt werden.

Besonders zweckmäßig erfolgt die Regelung unter zusätzlicher Berücksichtigung der Lufttemperatur auf der Austrittseite des Heiz- oder Kühlkörpers nach f), da dann auch Behaglichkeitsvorgaben, bspw. nach ISO 7730, eingehalten werden können.

Nachfolgend soll eine Ausführungsform der Erfindung anhand eines Figurenbeispiels näher erläutert werden. Dabei zeigt
- Fig. 1: eine schematische Darstellung einer erfindungsgemäßen Vorrichtung,
- Fig. 2: ein Kennfeld zur Heizleistung, und
- Fig. 3: ein Kennfeld zur Spreizung.

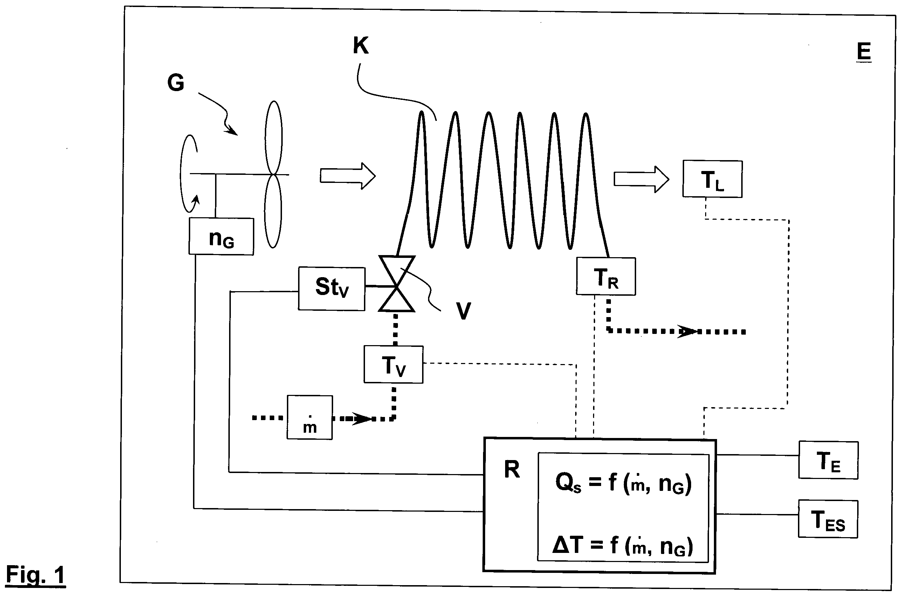

In Fig. 1 ist in schematischer Darstellung eine Anordnung zur Durchführung des erfindungsgemäßen Verfahrens gezeigt. Einem Heizkörper K wird dabei ein Heizmedium zugeführt bzw. abgeführt über die punktiert dargestellten Leitungen. Das Heizmedium wird mit einem Massenstrom m und einer Vorlauftemperatur T_{V} bereitgestellt. Es strömt durch ein Regelventil V in den Heizkörper K ein und verlässt diesen mit einer Rücklauftemperatur T_{R}.

Das Regelventil V nimmt Einfluss auf den Massenstrom ṁ, indem es den Durchlass zum Heizkörper K auf einen bestimmten Öffnungshub einstellt. Die Ventilstellung St_{V} steht dabei in einer definierten Beziehung zum resultierenden Massenstrom m, so dass durch Vorgabe einer Ventilstellung St_{V} ein entsprechender Massenstrom einstellbar ist.

Zur variablen Erhöhung der konvektiven Wärmeabgabe des Heizkörpers K in den Raum E ist ein Gebläse G vorgesehen, welches einen Luftstrom auf den Heizkörper K zu richten vermag. Das Gebläse G kann mit einer variablen Drehzahl n_{G} betrieben werden, womit die vom Heizkörper K abgegebene Leistung auch von der Drehzahl n_{G} abhängt.

Ein Regler R erfasst die Vorlauftemperatur Tᵥ, (alternativ die Rücklauftemperatur T_{R}, aus der die Vorlauftemperatur über die Spreizung ermittelt werden kann), eine im Raum E herrschende Raumtemperatur T_{E} und optional die Lufttemperatur T_{L} unmittelbar nach Durchströmung des Heizkörpers K (die Erfassung der Werte für T_{V}, T_{R} und T_{L} ist optional und nicht zwingend erforderlich für eine einfachste Ausführungsform, daher sind die Verbindungslinien zum Regler R gestrichelt dargestellt). Des Weiteren wird dem Regler R eine Solltemperatur T_{ES} übermittelt, die beispielsweise aus dem Wunsch einer Temperaturanhebung im Raum E resultiert. Sowohl die Drehzahl n_{G} des Gebläses G als auch die Ventilstellung St_{V} des Regelventils V wird dem Regler übermittelt bzw. ist von diesem einstellbar.

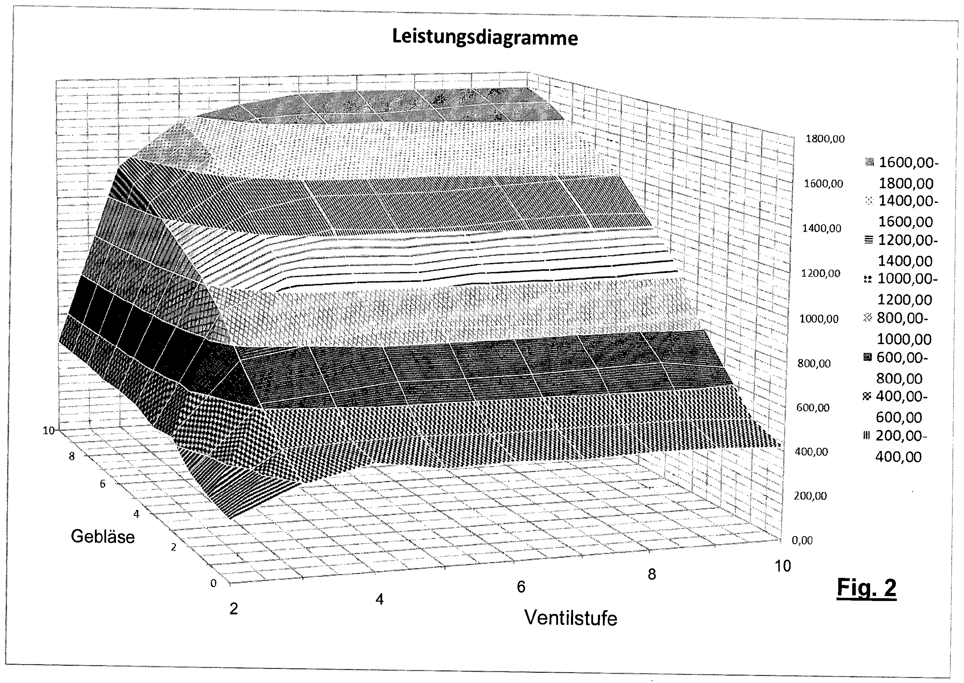

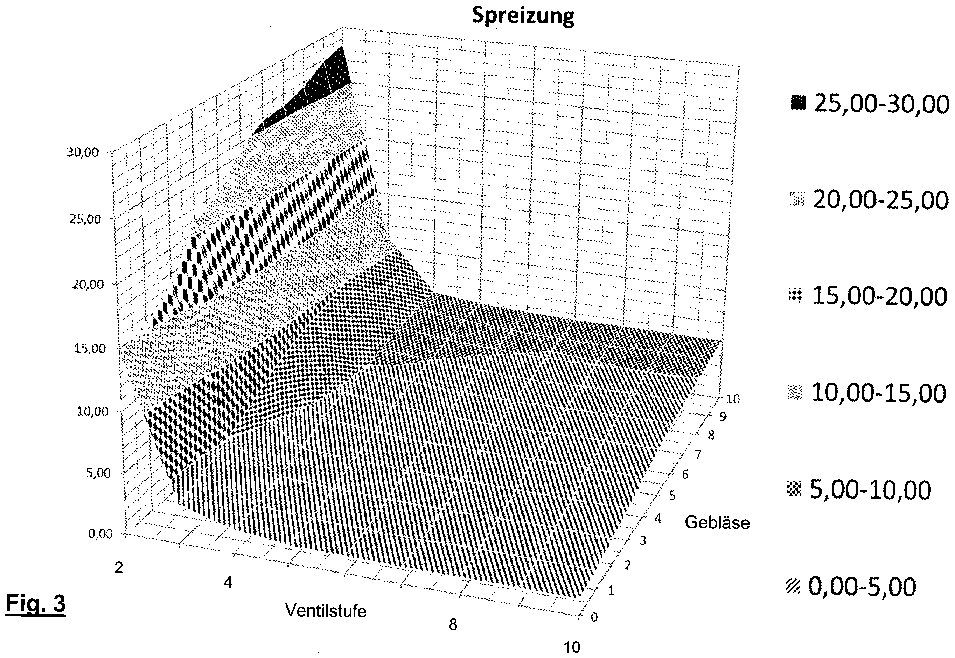

In dem Regler R sind Kennfelder für den Zusammenhang des Massenstroms m und der Gebläsedrehzahl n_{G} hinterlegt, die bei der vorgegebenen Vorlauftemperatur T_{V} und dem ausgewählten Typ des Heizkörpers K zu einer bestimmten Heizleistung Q_{S} führen. Weiterhin sind Kennfelder im Regler hinterlegt, die (bei vorgegebener Vorlauftemperatur T_{V} und bekanntem Heizkörpertyp) den Zusammenhang darstellen zwischen dem Massenstrom m und der Gebläsedrehzahl n_{G} für eine bestimmte Spreizung ΔT, als Temperaturdifferenz zwischen Vorlauftemperatur T_{V} und Rücklauftemperatur T_{R} (Fig. 2 und 3 erläutern diese Zusammenhänge näher).

Erhält der Regler R die Anforderung einer Raum-Solltemperatur T_{ES}, welche sich von der aktuellen Raumtemperatur T_{E} unterscheidet, so ermittelt er die zur Erzielung der gewünschten Raum-Solltemperatur T_{ES} erforderliche Leistung Q_{S}. Diese Leistung Q_{S} kann durch unterschiedliche Paarungen des Massenstroms m mit der Gebläsedrehzahl n_{G} erzielt werden. Besteht weiterhin der Wunsch, eine bestimmte Spreizung ΔT zu erreichen oder aufrecht zu erhalten, so ermittelt der Regler aus der Kurve für die Wärmeleistung Q_{S}, welche von m und n_{G} abhängt, dasjenige Wertepaar, welches zugleich auch die gewünschte Temperaturspreizung ΔT erzielt. Durch Einstellung der entsprechenden Gebläsedrehzahl n_{G} und der den ermittelten Massenstrom m bewirkenden Ventilstellung St_{V} wird am Heizkörper K die Wärmeleistung Q_{S} abgegeben, um die gewünschte Raumtemperatur T_{ES} zu erzielen.

Fig. 2 zeigt ein Leistungsdiagramm in Form eines Kennfeldes, welches durch die Ventilstellung einerseits (dargestellt als Ventilstufe "V-Stufe" von 0 - 10) und die Drehzahl des Lüfters (hier dargestellt als Bereich von 0 - 10) andererseits bestimmt wird. Das Leistungsdiagramm gilt für einen bestimmten Heizkörpertyp und eine bestimmte Vorlauftemperatur T_{V} (eine Änderung des Heizkörpertyps oder der Vorlauftemperatur T_{V} würde zu einer Verschiebung oder Verformung des Kennfeldes führen und andere Wertepaare für die Ventilstellung bzw. die Gebläsedrehzahl für die gleiche Leistung ergeben). Zu erkennen ist in Fig. 2, dass eine Leistung von beispielsweise 1000 W repräsentiert wird durch eine horizontal gebogene Linie bzw. Schnittkurve zwischen der vierten und fünften Leistungszone von oben. Eine höhere Lüfterdrehzahl bei geringerer Ventilstellung führt dabei ebenso zu dieser Leistung von 1000 W wie eine geringere Lüfterdrehzahl bei entsprechend höherer Ventilstufe, also bei entsprechend höherem Massenstrom. Jede gewünschte Heizleistung Q_{S} kann also durch unterschiedliche Wertepaare von Ventilstellung und Gebläsedrehzahl erreicht werden.

Als weitere Bedingung zur gezielten Auswahl der geeigneten Werte für den Massenstrom und die Gebläsedrehzahl wird erfindungsgemäß zusätzlich die Auswirkung dieser beiden Größen auf die Spreizung berücksichtigt, wie dies in Fig. 3 zu sehen ist. Dort ist, ebenfalls für einen bestimmten Heizkörptertyp und eine bestimmte Vorlauftemperatur T_{V}, die Spreizung zwischen Vorlauftemperatur T_{V} und Rücklauftemperatur T_{R} dargestellt in einem Bereich zwischen 0 und 30 Grad Kelvin. Zu erkennen ist dabei, dass eine Spreizung von beispielsweise 5 Grad Kelvin durch verschiedene Kombinationen der Ventilstellung mit der Gebläsedrehzahl einstellbar ist, nämlich entlang der Grenzkurve zwischen dem untersten und dem darüberliegenden zweiten Spreizungsfeld. So führt bei einem abgeschalteten Gebläse (Drehzahl n_{G} bzw. Gebläsestufe 0) eine Ventilstellung Vₛₜ von ca. 2,5 zu einer Spreizung von etwa 8 Grad Kelvin (vorderer linkerer Bereich des Diagramms). Nähme der Volumenstrom zu, erhöhte sich also die Ventilstellung Vₛₜ auf beispielsweise 3 oder 5, so würde ohne Gebläse die Spreizung absinken auf beispielsweise 3 oder 1,5 Grad Kelvin und die Leistung gemäß Fig. 2 ansteigen. Um den Spreizungswert von 8 Grad Kelvin bei erhöhter Leistungsanforderung mit nur gering verändertem Massenstrom zu erreichen, wird das Gebläse zugeschaltet mit derjenigen Drehzahl, die auch bei dem neuen Massenstrom die gewünschte Spreizung von 8 Grad Kelvin ergäbe.

Dabei ist zu berücksichtigen, dass ein zu geringer Massenstrom sich zwar zugunsten der Spreizung auswirkt, jedoch die geforderte Heizleistung insgesamt nicht mehr bringen kann. Auch der ständige Betrieb des Gebläses mit höchster Drehzahl, der sich ebenfalls zugunsten der Spreizung (und der konvektiven Wärmeübertragung) auswirken würde, verursacht Betriebskosten und evt. auch Geräuschbelästigungen, die zum Beispiel dann nicht anfallen würden, wenn auch ohne Lüfter sowohl die gewünschte Spreizung als auch die gewünschte Leistung erzeugt werden kann. Erfindungsgemäß wird daher ein optimaler Betriebspunkt für den Massenstrom (repräsentiert durch eine Ventilstellung St_{V} oder auch eine am Ventil anliegende Spannung) und die Gebläsedrehzahl (auch darstellbar durch Werte zwischen 0 und 10 bzw. eine in diesem Bereich wählbare, das Gebläse steuernde Spannung) gewählt, um unter den genannten Randbedingungen (Heizkörptertyp, Vorlauftemperatur, Betriebsdruck etc.) eine energetisch sinnvolle bzw. günstige Regelung des Heizkörpers K zu ermöglichen.

## Patentansprüche

1. Verfahren zur Regelung der Wärmeabgabe eines Heiz- oder Kühlkörpers (K),
dem durch ein Regelventil (V) ein Heiz- oder Kühlmittel mit einem Massenstrom (m) unter einer Vorlauftemperatur (T_{V}) zugeführt und mit einer Rücklauftemperatur (T_{R}) entnommen wird, um mit Unterstützung durch ein Gebläse (G) eine angeforderte Heiz-oder Kühlleistung (Q_{S}) in einen Raum (E) abzugeben,
wobei der Massenstrom (m) und die Gebläsedrehzahl (n_{G}) des Gebläses (G) so eingestellt werden, dass die geforderte Heiz- oder Kühlleistung (Q_{S}) mit einer vorgebbaren Spreizung (ΔT) zwischen Vorlauf- und Rücklauftemperatur (T_{V}, T_{R}) abgegeben wird,
**dadurch gekennzeichnet,**
a) **dass** die Gebläsedrehzahl (n_{G}) des Gebläses (G) variabel einstellbar ist, und
b) **dass** für eine vorgebbare Leistung (Q_{S}) und/oder eine vorgebbare Spreizung (ΔT) jeweils einander zugeordnete Werte von Massenstrom (m) und Gebläsedrehzahl (n_{G}) als abrufbare Wertepaare (ṁ, n_{G}) bereitgestellt werden.

2. Verfahren nach dem vorhergehenden Anspruch, **dadurch gekennzeichnet, dass** die Einstellung des Massenstroms (m) erfolgt unter Auswahl desjenigen Wertepaares (ril, n_{G}), welches sowohl die gewünschte Leistung (Q_{S}) als auch die gewünschte Spreizung (ΔT) repräsentiert.

3. Verfahren nach einem der vorigen Ansprüche, **dadurch gekennzeichnet, dass** die Einstellung des Massenstroms (ṁ) unter Berücksichtigung einer vorgebbaren oder veränderlichen Vorlauftemperatur (T_{V}) erfolgt.

4. Verfahren nach einem der vorigen Ansprüche, **dadurch gekennzeichnet, dass** für verschiedene Heiz- oder Kühlkörper (K), verschiedene Vorlauftemperaturen (T_{V}), verschiedene Regelventiltypen (V) oder Kombinationen daraus jeweils Wertepaare bzw. Datensätze für den Massenstrom (m) und die Gebläsedrehzahl (n_{G}) bereitgestellt werden, welche für die jeweilige Kombination von Regelventil (V), Heiz- oder Kühlkörper (K) oder Vorlauftemperatur (T_{V}) zur geforderten Heizleistung (Qₛ) bei geforderter Spreizung (ΔT) führen.

5. Verfahren nach einem der vorigen Ansprüche, **dadurch gekennzeichnet, dass** ein Regler (C) aus der Differenz zwischen Soll- und Ist-Wert einer Raumtemperatur (T_{ES}, T_{E}) die Öffnung des Regelventils (V) und die Gebläsedrehzahl (n_{G}) so einstellt, dass sich die gewünschte Spreizung (ΔT) bei der gewünschten Leistung (Q_{S}) einstellt.

6. Verfahren nach dem vorhergehenden Anspruch, **dadurch gekennzeichnet, dass** der Regler (C) auf in ihm oder einer übergeordneten Steuereinheit (D) hinterlegte Datensätze zugreift, welche einer Kombination verschiedene Werte für den Volumenstrom (ṁ) und Gebläsedrehzahl (n_{G}) jeweils eine Spreizung (ΔT) oder eine Leistung (Q_{S}) zuordnen.

7. Verfahren nach einem der vorigen Ansprüche, **dadurch gekennzeichnet, dass** die Differenz (ΔT_{LE}) zwischen der Lufttemperatur (T_{L}) auf der Austrittseite des Heiz- oder Kühlkörpers (K) und der Raumtemperatur (T_{E}) erfasst wird, um bei Überschreitung eines vorgebbaren Maximalwertes (ΔT_{LEmax}) den Volumenstrom so anzupassen, dass die Differenz (ΔT_{LE}) innerhalb vorgebbarer Behaglichkeitsgrenzen bleibt.

8. Vorrichtung zur Durchführung des Verfahrens nach einem der vorigen Ansprüche, umfassend
i. einen Heiz- oder Kühlkörper (K) mit Gebläseunterstützung zur Anordnung in einem Raum (E);
ii. ein Regelventil (V), durch welches dem Heiz- oder Kühlkörper (K) ein Heiz-oder Kühlmittel mit einem Massenstrom (m) bei einer Vorlauftemperatur (T_{V}) zuführbar ist,
iii. einen Regler (C) zur Einstellung des Massenstroms (m) über den Öffnungshub des Regelventils (V) und der Drehzahl (n_{G}) des Gebläses,
**dadurch gekennzeichnet, dass**
der Regler (C) derart konfiguriert ist, dass für eine vorgebbare Leistung (Q_{S}) und/oder eine vorgebbare Spreizung (ΔT) jeweils einander zugeordnete Werte von
Massenstrom (m) und Gebläsedrehzahl (nG) als abrufbare Wertepaare (m, nG) bereitgestellt werden.

9. Vorrichtung nach dem vorhergehenden Anspruch, **dadurch gekennzeichnet, dass** der Regler (C) ausgebildet ist zur Erfassung
a) der Differenz (AT_{E}) zwischen einer Raum-Solltemperatur (T_{ES}) und einer Raum-Ist-Temperatur (T_{E}), und
d) des Öffnungshubs des Regelventils (V), und
e) der Gebläsedrehzahl (n_{G})

10. Vorrichtung nach dem vorhergehenden Anspruch, **dadurch gekennzeichnet, dass** der Regler (C) weiterhin ausgebildet ist zur Erfassung
b) der Vorlauftemperatur (T_{V}), und/oder
c) der Rücklauftemperatur (T_{R}), mit welcher das Heiz-oder Kühlmittel den Heiz-oder Kühlkörper (K) verlässt.

11. Vorrichtung nach dem vorhergehenden Anspruch, **dadurch gekennzeichnet, dass** der Regler (C) weiterhin ausgebildet ist zur Erfassung f) der Lufttemperatur (TL) auf der Austrittseite des Heiz- oder Kühlkörpers (K).

## Claims

1. A method for controlling the heat-delivery of a heating or cooling body (K), to which by means of a control valve (V) a heating or cooling agent with a mass flow (m) is fed at a supply temperature (Tᵥ) and is removed at a return temperature (T_{R}) in order to deliver into a space (E), with assistance by means of a fan (G), a requested heating or cooling capacity (Qₛ),
wherein the mass flow (m) and the fan speed (n_{G}) of the fan (G) are set in such a way that the required heating or cooling capacity (Qₛ) is delivered with a predeterminable spread (ΔT) between supply and return temperature (Tᵥ, T_{R}),
**characterised in that**
a) the fan speed (n_{G}) of the fan (G) can be set in a variable manner, and
b) for a predeterminable capacity (Qₛ) and/or a predeterminable spread (ΔT) values of mass flow (m) and fan speed (n_{G}) respectively associated with each other are provided as retrievable pairs of values (m, n_{G}).

2. A method according to the preceding claim, **characterised in that** the mass flow (m) is set with selection of that pair of values (ril, n_{G}) that represents both the desired capacity (Qₛ) and the desired spread (ΔT).

3. A method according to one of the previous claims, **characterised in that** the mass flow (m) is set in consideration of a predeterminable or variable supply temperature (Tᵥ).

4. A method according to one of the previous claims, **characterised in that** for different heating or cooling bodies (K), different supply temperatures (Tᵥ), different control-valve types (V) or combinations thereof respectively pairs of values or data sets are provided for the mass flow (m) and the fan speed (n_{G}) that result in the required heating capacity (Qₛ) with the required spread (ΔT) for the respective combination of control valve (V), heating or cooling body (K) or supply temperature (Tᵥ).

5. A method according to one of the previous claims, **characterised in that** from the difference between the desired and actual value of the temperature of a space (T_{ES}, T_{E}) a controller (C) sets the opening of the control valve (V) and the fan speed (n_{G}) in such a way that the desired spread (ΔT) sets in with the desired capacity (Qₛ).

6. A method according to the preceding claim, **characterised in that** the controller (C) accesses data sets which are stored in it or in a superordinate control unit (D) and associate with a combination of different values for the volume flow (m) and fan speed (n_{G}) respectively a spread (ΔT) or a capacity (Qₛ).

7. A method according to one of the previous claims, **characterised in that** the difference (ΔT_{LE}) between the air temperature (T_{L}) on the exit side of the heating or cooling body (K) and the space temperature (T_{E}) is detected in order, in the event of a predeterminable maximum value (ΔT_{LEmax}) being exceeded, to adapt the volume flow in such a way that the difference (ΔT_{LE}) remains within predeterminable limits of comfort.

8. A device for carrying out the method according to one of the previous claims, comprising
i. a heating or cooling body (K) with fan-assistance for arrangement in a space (E);
ii. a control valve (V), by means of which it is possible to feed to the heating or cooling body (K) a heating or cooling agent with a mass flow (m) at a supply temperature (Tᵥ),
iii. a controller (C) for setting the mass flow (m) by way of the opening stroke of the control valve (V) and the speed (n_{G}) of the fan,
**characterised in that**
the controller (C) is configured in such a way that for a predeterminable capacity (Qₛ) and/or a predeterminable spread (ΔT) values of mass flow (m) and fan speed (n_{G}) respectively associated with each other are provided as retrievable pairs of values (m, n_{G}).

9. A device according to the preceding claim, **characterised in that** the controller (C) is formed to detect
a) the difference (AT_{E}) between a desired space temperature (T_{ES}) and an actual space temperature (T_{E}), and
d) the opening stroke of the control valve (V), and
e) the fan speed (n_{G}).

10. A device according to the preceding claim, **characterised in that** the controller (C) is formed, furthermore, to detect
b) the supply temperature (Tᵥ), and/or
c) the return temperature (T_{R}) with which the heating or cooling agent leaves the heating or cooling body (K).

11. A device according to the preceding claim, **characterised in that** the controller (C) is formed, furthermore, to detect f) the air temperature (T_{L}) on the exit side of the heating or cooling body (K).

## Revendications

1. Procédé de régulation de l'émission de chaleur d'un corps de chauffage ou de refroidissement (K), auquel un moyen de chauffage ou de refroidissement avec un flux massique (m) est amené sous une température aller (T_{V}) par une soupape de régulation (V) et est repris à une température retour (T_{R}) afin d'émettre avec le soutien d'une soufflante (G) une puissance de chauffage ou de refroidissement (Qs) exigée dans un espace (E),
dans lequel le flux massique (m) et la vitesse de rotation de soufflante (n_{G}) de la soufflante (G) sont réglés de sorte que la puissance de chauffage ou de refroidissement (Q_{S}) exigée soit émise avec un écart (ΔT) prescriptible entre une température aller et une température retour (T_{V}, T_{R}),
**caractérisé en ce que**
a) la vitesse de rotation de soufflante (n_{G}) de la soufflante (G) est réglable de manière variable, et
b) pour une puissance (Q_{S}) prescriptible et/ou un écart (ΔT) prescriptible, des valeurs associées respectivement l'une à l'autre de flux massique (m) et de vitesse de rotation de soufflante (n_{G}) sont mises à disposition comme paires de valeur appelables (m, n_{G}).

2. Procédé selon la revendication précédente, **caractérisé en ce que** le réglage du flux massique (m) est effectué en sélectionnant la paire de valeur (ril, n_{G}) qui représente non seulement la puissance (Q_{S}) souhaitée mais aussi l'écart (ΔT) souhaité.

3. Procédé selon l'une quelconque des revendications précédentes, **caractérisé en ce que** le réglage du flux massique (m) est effectué en tenant compte d'une température aller (T_{V}) prescriptible ou modifiable.

4. Procédé selon l'une quelconque des revendications précédentes, **caractérisé en ce que** pour différents corps de chauffage ou de refroidissement (K), différentes températures aller (T_{V}), différents types de soupape de régulation (V) ou des combinaisons de ceux-ci, respectivement des paires de valeur ou jeux de données pour le flux massique (m) et la vitesse de rotation de soufflante (n_{G}) sont mis à disposition, lesquels entraînent pour la combinaison respective de soupape de régulation (V), corps de chauffage ou de refroidissement (K) ou température aller (T_{V}) la puissance de chauffage (Q_{S}) exigée en cas d'écart (ΔT) exigé.

5. Procédé selon l'une quelconque des revendications précédentes, **caractérisé en ce qu'**un régulateur (C) règle, à partir de la différence entre la valeur de consigne et la valeur réelle d'une température ambiante (T_{ES}, T_{E}), l'ouverture de la soupape de régulation (V) et la vitesse de rotation de soufflante (n_{G}) de sorte que l'écart (ΔT) souhaité se règle pour la puissance (Q_{S}) souhaitée.

6. Procédé selon la revendication précédente, **caractérisé en ce que** le régulateur (C) accède à des jeux de données enregistrés en lui ou une unité de commande supérieure (D) qui attribuent, à une combinaison de différentes valeurs pour le flux volumique (m) et la vitesse de rotation de soufflante (n_{G}), respectivement un écart (ΔT) ou une puissance (Q_{S}).

7. Procédé selon l'une quelconque des revendications précédentes, **caractérisé en ce que** la différence (ΔT_{LE}) entre la température d'air (T_{L}) sur le côté de sortie du corps de chauffage ou de refroidissement (K) et la température ambiante (T_{E}) est détectée afin d'adapter lors du dépassement d'une valeur maximum prescriptible (ΔT_{LEmax}) le courant volumique de sorte que la différence (ΔT_{LE}) reste dans des limites de confort prescriptibles.

8. Dispositif de réalisation du procédé selon l'une quelconque des revendications précédentes, comprenant
i. un corps de chauffage ou de refroidissement (K) avec le soutien d'une soufflante pour l'agencement dans un espace (E) ;
ii. une soupape de régulation (V), par laquelle un moyen de chauffage ou de refroidissement peut être amené au corps de chauffage ou de refroidissement (K) avec un flux massique (m) pour une température aller (T_{V}),
iii. un régulateur (C) pour le réglage du flux massique (m) par la course d'ouverture de la soupape de régulation (V) et de la vitesse de rotation (n_{G}) de la soufflante, **caractérisé en ce que**
le régulateur (C) est configuré de telle manière que pour une puissance (Q_{S}) prescriptible et/ou un écart (ΔT) prescriptible, respectivement des valeurs associées l'une à l'autre de flux massique (m) et de la vitesse de rotation de soufflante (n_{G}) sont mises à disposition comme paires de valeur appelables (m, n_{G}).

9. Dispositif selon la revendication précédente, **caractérisé en ce que** le régulateur (C) est réalisé pour la détection
a) de la différence (AT_{E}) entre une température de consigne ambiante (T_{ES}) et une température réelle ambiante (T_{E}) et
d) de la course d'ouverture de la soupape de régulation (V) et
e) de la vitesse de rotation de soufflante (n_{G}).

10. Dispositif selon la revendication précédente, **caractérisé en ce que** le régulateur (C) est réalisé en outre pour la détection
b) de la température aller (T_{V}) et/ou
c) de la température retour (T_{R}), à laquelle le moyen de chauffage ou de refroidissement quitte le corps de chauffage ou de refroidissement (K).

11. Dispositif selon la revendication précédente, **caractérisé en ce que** le régulateur (C) est réalisé en outre pour la détection f) de la température d'air (TL) sur le côté de sortie du corps de chauffage ou de refroidissement (K).
